# EUROPEAN PATENT SPECIFICATION

(11) **EP 3 321 159 B1**
(45) Date of publication and mention of the grant of the patent: **24.04.2019**
(21) Application number: 17200569.6
(22) Date of filing: 08.11.2017
(51) Int. Cl.: B62L 3/02, B60T 8/17, B60T 8/36, B62K 19/38

(54) **STRADDLED VEHICLE**
GRÄTSCHSITZFAHRZEUG
VÉHICULE À ENFOURCHER

(30) Priority: 09.11.2016 JP 2016219066
(43) Date of publication of application: 16.05.2018
(73) Proprietor: Yamaha Hatsudoki Kabushiki Kaisha, Iwata-shi Shizuoka 438-8501 (JP)
(72) Inventor: FUJIWARA, Yu, Iwata-shi Shizuoka 438-8501 (JP)
(74) Representative: Grünecker Patent- und Rechtsanwälte PartG mbB

(56) References cited:
- EP-A1- 2 213 536
- WO-A1-2015/079478
- JP-A- 2017 065 405

## Description

The present invention relates to a straddled vehicle according to the preamble of independent claim 1. Such a straddled vehicle can be taken from the prior art document WO 2015/079478 A1, which shows all the features of the preamble of independent claim 1.

EP 2213536 B1 discloses a scooter which is an example of a straddled vehicle. The scooter includes an ABS unit disposed on the right side of a head pipe and a battery disposed in front of the head pipe. A front cover is disposed in front of the head pipe and a leg shield is disposed behind the head pipe. The ABS unit and the battery are disposed between the front cover and the leg shield.

The scooter disclosed in EP 2213536 B1 further includes a scooter-type front fork. The scooter-type front fork includes a right-and-left pair of fork pipes (in EP 2213536, referred to fork bodies), an under bracket connected to an upper end portion of the pair of fork pipes, and a steering shaft that extends upward from the under bracket. The steering shaft is inserted in the head pipe. The front fork is turnable rightward and leftward with respect to the head pipe.

There is a case in which a motorcycle-type front fork (hereinafter, referred to as an "MC-type front fork" if necessary), not the scooter-type front fork, is employed in a motorcycle. The MC-type front fork has the advantage of having a higher rigidity than the scooter-type front fork, whereas the MC-type front fork has the disadvantage of having a larger upper portion than the scooter-type front fork.

In detail, the MC-type front fork includes a right-and-left pair of fork pipes, a top bracket connected to an upper end portion of the pair of fork pipes, an under bracket that is disposed at a lower position than the top bracket and that is connected to the pair of fork pipes, and a steering shaft that extends from the under bracket to the top bracket. The steering shaft is inserted in a head pipe.

The steering shaft is disposed at a higher position than the upper end of the fork pipe in the scooter-type front fork, whereas the upper portion of the front fork is disposed laterally of the steering shaft in the MC-type front fork. Therefore, the MC-type front fork has its upper portion whose width is greater than the scooter-type front fork. Additionally, the upper portion of the front fork is large in the vehicle width direction, and therefore, a volume of a passing space through which the front fork passes when the front fork pivots rightward and leftward with respect to the head pipe is also large.

In the scooter disclosed in EP 2213536 B1, the ABS unit is disposed on the right side of the head pipe. If the MC-type front fork is employed in the scooter, the upper portion of the MC-type front fork is disposed laterally of the head pipe and thus there is a need to move the ABS unit rightward. However, this leads to the enlargement of the front cover that houses the upper portion of the front fork and the ABS unit.

Therefore, it is an object of the present invention to provide a straddled vehicle that includes a front cover housing a hydraulic unit of an ABS unit and an upper portion of an MC-type front fork and that is capable of preventing or minimizing an enlargement of the front cover. The present object is achieved by a straddled vehicle according to Claim 1. Preferred embodiments are laid down in the dependent claims.

A preferred embodiment provides a straddled vehicle including a front wheel, a front fork that supports the front wheel, a head pipe that supports the front fork such that the front fork turns rightward and leftward between a rightward maximum steering position and a leftward maximum steering position, an ABS including a hydraulic unit that controls a braking force to be applied to the front wheel and a front cover that houses an upper portion of the front fork and the hydraulic unit.

The front fork includes a pair of fork pipes that are disposed on a right side and a left side of a vehicle center, respectively, a steering shaft that is inserted in the head pipe, a top bracket that is connected to the pair of fork pipes and the steering shaft and an under bracket that is disposed at a lower position than the top bracket and that is connected to the pair of fork pipes and the steering shaft. The top bracket includes a pair of upper holder portions into which the pair of fork pipes are inserted, respectively and disposed on the right side and the left side of the vehicle center, respectively. The upper holder portion of the top bracket moves in a front-rear direction of the straddled vehicle and passes through a pass-through space in accordance with the turn of the front fork between the rightward maximum steering position and the leftward maximum steering position.

The hydraulic unit is entirely disposed at a more outward position in a width direction of the straddled vehicle than the head pipe. At least a portion of the hydraulic unit is disposed over the pass-through space in a side view of the straddled vehicle and is disposed at a lower position than an upper end of the pass-through space in a side view of the straddled vehicle.

According to this arrangement, a motorcycle-type front fork is included in the straddled vehicle. The pair of fork pipes of the front fork are connected to the pair of upper holder portions of the top bracket, respectively. When the front fork turns rightward and leftward with respect to the head pipe between the rightward maximum steering position and the leftward maximum steering position, the pair of upper holder portions move in the front-rear direction of the straddled vehicle while moving in the width direction of the straddled vehicle. The pass-through space represents a space through which the upper holder portion passes when the front fork moves from the rightward maximum steering position to the leftward maximum steering position.

At least a portion of the hydraulic unit of the ABS is disposed over the pass-through space in a side view of the straddled vehicle. That is, the hydraulic unit is not disposed laterally of the front fork, but is disposed over the pass-through space in a side view of the straddled vehicle. Thus, the hydraulic unit can be moved toward the vehicle center, so that it is possible to prevent or minimize the enlargement of the front cover, which houses the upper portion of the front fork and the hydraulic unit, in the width direction of the straddled vehicle.

Additionally, at least a portion of the hydraulic unit is disposed at a position that is further to the rear than the front end of the pass-through space and that is further to the front than the rear end of the pass-through space in a side view of the straddled vehicle. Thus, it is possible to prevent or minimize the enlargement of the front cover in the front-rear direction. Moreover, at least a portion of the hydraulic unit is disposed at a position lower than the upper end of the pass-through space in a side view of the straddled vehicle. That is, the hydraulic unit is moved in the up-down direction toward the pass-through space. Thus, it is possible to minimize the enlargement of the front cover in the up-down direction.

In the present preferred embodiment, at least one of the following features may be added to the above straddled vehicle.

The straddled vehicle further includes a front stay that extends forward from the head pipe and a head lamp that is supported by the front stay. The front stay includes a lamp-supporting portion that supports the head lamp and an HU supporting portion that supports the hydraulic unit.

According to this arrangement, the head lamp is supported by the front stay extending forward from the head pipe. The front stay includes, in addition to the lamp-supporting portion that supports the head lamp, the HU supporting portion that supports the hydraulic unit. Thus, the front cover can be downsized as compared with a case in which a stay that supports the head lamp and a stay that supports the hydraulic unit are independent from each other.

The front stay may be a single and integral member, or may be a plurality of members that are connected to each other. Specifically, the HU supporting portion of the front stay may be integral with the lamp-supporting portion, or may be a member that is separate from the lamp-supporting portion and connected to the lamp-supporting portion. Similarly, a battery supporting portion described below may be integral with the lamp-supporting portion, or may be a member that is separate from the lamp-supporting portion and connected to the lamp-supporting portion.

The straddled vehicle further includes a battery that is disposed inside the front cover. The front stay further includes a battery supporting portion that supports the battery.

According to this arrangement, the battery is housed in the front cover. The front stay includes, in addition to the lamp-supporting portion and the HU supporting portion, the battery supporting portion that supports the battery. That is, the battery supporting portion, the lamp-supporting portion and the HU supporting portion are provided with the same stay. Thus, the front cover can be downsized as compared with a case in which a stay that supports the battery, a stay that supports the head lamp and a stay that supports the hydraulic unit are independent from each other.

The straddled vehicle further includes a seat on which a rider sits, a storage box that is disposed under the seat and a battery that is disposed inside the front cover.

According to this arrangement, the storage box to house goods is disposed under the seat. The storage box includes an opening provided in the upper end portion of the storage box and a storage space accessible from above the storage box through the opening. Meanwhile, the battery is disposed inside the front cover. If the battery is disposed close to the storage box, the battery could limit the shape and the size of the storage box. Thus, the capacity of the storage box can be increased by disposing the battery inside the front cover.

The straddled vehicle further includes a front stay that extends forward from the head pipe and a head lamp that is supported by the front stay. The front stay includes a lamp-supporting portion that supports the head lamp and a battery supporting portion that supports the battery.

According to this arrangement, the head lamp is supported by the front stay extending forward from the head pipe. The front stay includes, in addition to the lamp-supporting portion that supports the head lamp, the battery supporting portion that supports the battery. Thus, the front cover can be downsized as compared with a case in which a stay that supports the head lamp and a stay that supports the battery are independent from each other.

The straddled vehicle further includes a front pocket that houses goods and that is disposed outward of the front fork in the width direction of the straddled vehicle. The hydraulic unit is disposed over the front pocket.

According to this arrangement, the front pocket to house goods is disposed outward of the front fork in the width direction of the straddled vehicle. If the hydraulic unit is disposed outward of the front pocket in the width direction of the straddled vehicle, the front cover would be enlarged in the width direction of the straddled vehicle. The hydraulic unit is not disposed laterally of the front pocket, but is disposed over the front pocket. Thus, the front cover can be prevented from enlarging in the width direction of the straddled vehicle.

An upper surface of the front pocket includes an inclined portion that is disposed under the hydraulic unit and extends obliquely forward and downward in a side view of the straddled vehicle.

According to this arrangement, the inclined portion provided in the upper surface of the front pocket extends obliquely forward and downward in a side view of the straddled vehicle. A space over the front pocket includes a large region that enlarges in the up-down direction as the front end of the inclined portion is approached. A portion or a whole of the hydraulic unit is disposed in this large region. Thus, the space inside the front cover can be utilized efficiently and the enlargement of the front cover can be prevented or minimized.

The ABS further includes a brake hose that extends from the hydraulic unit and that transmits oil pressure. The brake hose passes through a space between the pair of fork pipes.

According to this arrangement, the brake hose to transmit oil pressure passes through a space between the pair of fork pipes. That is, the space between the pair of fork pipes is utilized as a space in which a portion of the brake hose is disposed. Thus, the space inside the front cover can be utilized efficiently and the enlargement of the front cover can be prevented or minimized.

The brake hose passes through a space between the top bracket and the under bracket.

According to this arrangement, the brake hose passes through not only the space between the pair of fork pipes, but also a space between the top bracket and the under bracket. Thus, the space inside the front cover can be utilized efficiently and the enlargement of the front cover can be prevented or minimized.

The straddled vehicle further includes a front stay that extends forward from the head pipe and a head lamp that is supported by the front stay. The ABS further includes an ECU that is attached to the hydraulic unit and a wire harness that transmits electrical signals to the ECU. The wire harness passes through a space between the front fork and the front stay.

According to this arrangement, the wire harness of the ABS passes through a space between the front fork and the front stay. That is, the space between the front fork and the front stay is utilized as a space in which a portion of the wire harness is disposed. Thus, the space inside the front cover can be utilized efficiently and the enlargement of the front cover can be prevented or minimized.

The straddled vehicle further includes an engine that generates a motive power to cause the straddled vehicle to travel and a muffler that discharges exhaust gas generated in the engine to the atmosphere. The muffler and the hydraulic unit are disposed on the right side of the vehicle center. The wire harness extends from a position on the right side of the vehicle center to a position on the left side of the vehicle center.

According to this arrangement, the hydraulic unit is disposed on the right side of the vehicle center. The first end of the wire harness is connected to the hydraulic unit. The wire harness extends from the position on the right side of the vehicle center to the position on the left side of the vehicle center. Thus, an electrical device connected to the second end of the wire harness is disposed on the left side of the vehicle center. The muffler to guide exhaust gas of high temperature is disposed on the right side of the vehicle center. Thus, the electrical device connected to the second end of the wire harness can be separated in the width direction of the straddled vehicle from the high temperature device, i.e., the muffler.

The straddled vehicle further includes a pair of handle grips that are disposed on the right side and the left side of the vehicle center, respectively and that are to be grasped by a rider when the front fork is turned rightward and leftward. The hydraulic unit is disposed at a more inward position in the width direction of the straddled vehicle than an inner end of the handle grip.

According to this arrangement, the inner end of the handle grip in the width direction of the straddled vehicle is disposed at a more outward position than the outer end of the hydraulic unit in the width direction of the straddled vehicle. In other words, the hydraulic unit is approached to the vehicle center to achieve this. Thus, the enlargement of the front cover in the width direction of the straddled vehicle is prevented or minimized.

According to the present invention, the hydraulic unit overlaps the pass-through space in a plan view of the straddled vehicle.

According to this arrangement, the hydraulic unit is disposed over the pass-through space and overlaps the pass-through space in a plan view of the straddled vehicle. In other words, the hydraulic unit is approached to the vehicle center to achieve this. Thus, the enlargement of the front cover in the width direction of the straddled vehicle is prevented or minimized.

The above and other elements, features, steps, characteristics, and advantages of the present invention will become more apparent from the following detailed description of the preferred embodiments with reference to the attached drawings.

### BRIEF DESCRIPTION OF THE DRAWINGS

FIG. 1 is a left side view of a scooter according to a preferred embodiment.
FIG. 2 is a front view showing a portion of a front surface of the scooter including a head lamp.
FIG. 3 is a left side view of a frame included in the scooter.
FIG. 4 is a front view showing a steering handle and a front fork.
FIG. 5 is a right side view showing the steering handle and the front fork.
FIG. 6 is a front view to describe a positional relationship among the headlamp, a battery, a battery holder, and a front stay.
FIG. 7 is a right side view to describe a positional relationship among the headlamp, the battery, the battery holder, and the front stay.
FIG. 8 is a conceptual diagram to describe an ABS.
FIG. 9 is a front view showing an ABS unit including a hydraulic unit.
FIG. 10 is a right side view showing the ABS unit including the hydraulic unit.
FIG. 11 is a plan view showing the ABS unit including the hydraulic unit.
FIG. 12 is a right side view to describe a position of the ABS unit with respect to a pass-through space through which the top bracket passes in accordance to the turn of the front fork.
FIG. 13 is a plan view to describe the position of the ABS unit with respect to the pass-through space through which the top bracket passes in accordance to the turn of the front fork.
FIG. 14 is a schematic plan view to describe another example of the position of the ABS unit.

### DETAILED DESCRIPTION OF PREFERRED EMBODIMENTS

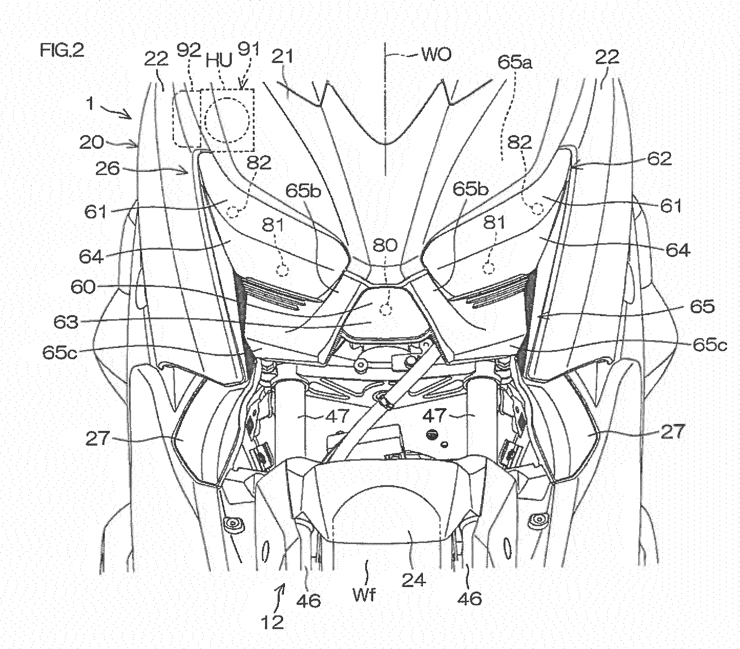

Front-rear, up-down, and right-left directions are defined on the basis of a viewpoint of a forward-facing rider who sits on a scooter 1 in a reference posture in which the scooter 1 travels straight ahead on a horizontal plane (in which a steering handle 11 is disposed at a straight-traveling position). The right-left direction corresponds to a vehicle width direction (a width direction of the scooter 1). A vehicle center WO (refer to FIG. 2) corresponds to a vertical plane that passes through a center line of a head pipe 3 and that is perpendicular to a rotational center of a rear wheel Wr. The scooter 1 in the reference posture will be hereinafter described unless specific notice is given. A front view, a side view, and a plan view mean a front view, a side view, and a plan view of the scooter 1, respectively unless specific notice is given.

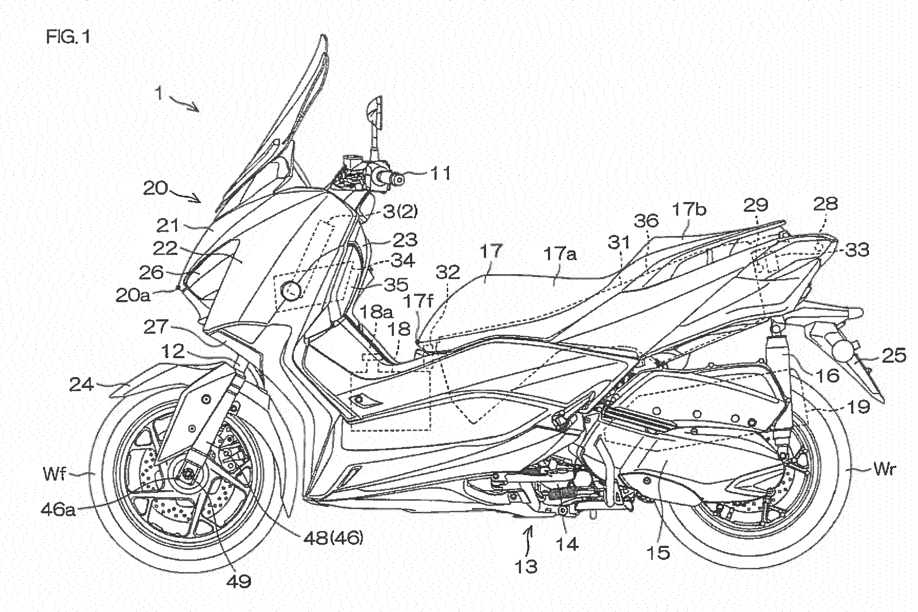

FIG. 1 is a left side view of the scooter 1 according to a preferred embodiment. FIG. 2 is a front view showing a portion of a front surface of the scooter including a head lamp. FIG. 2 is a left side view of a frame 2 included in the scooter 1.

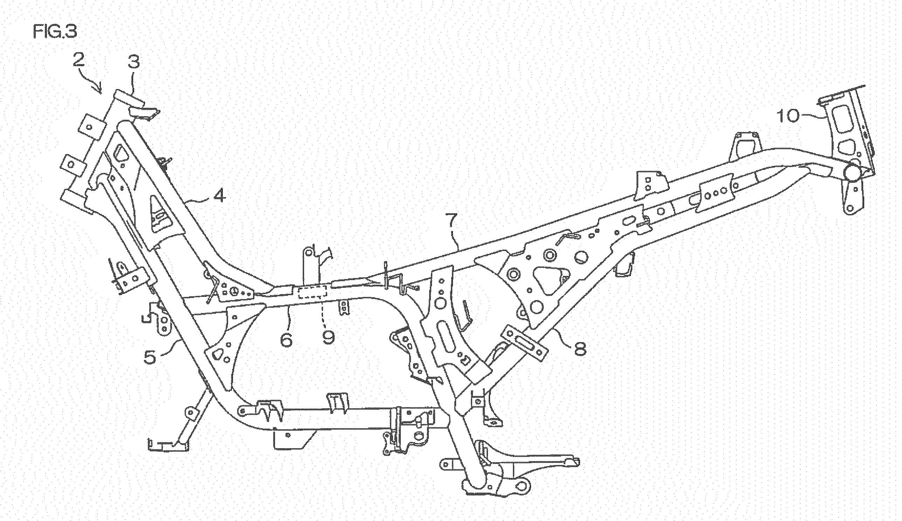

As shown in FIG. 1, the scooter 1, which is an example of a straddled vehicle, includes the frame 2 covered with an exterior cover. The frame 2 includes a head pipe 3 that extends obliquely rearward and upward. As shown in FIG. 3, the frame 2 further includes a right-and-left pair of upper down frames 4 that extend obliquely rearward and downward from the head pipe 3, a right-and-left pair of lower down frames 5 that extend obliquely rearward and downward from the head pipe 3, and a right-and-left pair of lower frames 6 that extend rearward from the lower down frames 5.

The upper down frame 4 is disposed at a higher position than the lower down frame 5, and overlaps with the lower down frame 5 in a plan view. A rear end portion of the upper down frame 4 is disposed at an upper position and at a more forward position than a rear end portion of the lower down frame 5. The rear end portion of the upper down frame 4 and the rear end portion of the lower down frame 5 are each disposed at a more rearward position than a front end portion of the lower frame 6. The rear end portion of the upper down frame 4 and the rear end portion of the lower down frame 5 are connected to the lower frame 6.

The frame 2 includes a right-and-left pair of upper rear frames 7 that extend obliquely rearward and upward from the pair of lower frames 6 and a right-and-left pair of lower rear frames 8 that extend obliquely rearward and upward from the pair of lower frames 6. The frame 2 further includes a front cross member 9 that extends from one lower frame 6 to the other lower frame 6 and a rear cross member 10 that extends from one upper rear frame 7 to the other upper rear frame 7.

The upper rear frame 7 is disposed at a higher position than the lower rear frame 8, and overlaps with the lower rear frame 8 in a plan view. The upper rear frame 7 corresponds to a seat frame. The front end portion of the upper rear frame 7 is disposed at a higher position and at a more forward position than the front end portion of the lower rear frame 8. The rear end portion of the upper rear frame 7 is disposed at a more rearward position than the rear end portion of the lower rear frame 8. The rear end portion of the lower rear frame 8 is connected to the upper rear frame 7.

As shown FIG. 1, the scooter 1 includes a steering handle 11 to be steered by a rider, and a front fork 12 rotatably supporting the front wheel Wf. The steering handle 11 is coupled to the front fork 12, which is an example of a front wheel supporting member. The steering handle 11 and the front fork 12 are pivotable with respect to the frame 2 around a steering axis corresponding to a central line of the head pipe 3. When the steering handle 11 is steered, the front wheel Wf is pivoted rightward and leftward together with the steering handle 11. The scooter 1 is thereby steered.

The scooter 1 includes a swing unit 13 swingable upward and downward with respect to the frame 2. The swing unit 13 includes an engine 14, which generates a motive power that makes the scooter 1 travel, and a driving mechanism 15, transmitting the motive power of the engine 14 to the rear wheel Wr. The scooter 1 includes a muffler 19 that discharges exhaust gas generated in the engine 14 to the atmosphere.

The swing unit 13 is disposed on the left side of the vehicle center WO. The muffler 19 is disposed on the right side of the vehicle center WO. The swing unit 13 is mounted on the frame 2 via a pivot shaft extending in the vehicle width direction. The rear wheel Wr is rotatably supported by a rear end portion of the swing unit 13. The rear wheel Wr and the swing unit 13 are swingable upward and downward around the pivot shaft with respect to the frame 2. An upper end portion of a rear cushion 16 is mounted on the frame 2 and a lower end portion of the rear cushion 16 is mounted on the rear end portion of the swing unit 13.

The scooter 1 includes a saddle type seat 17 on which a rider sits. FIG. 1 shows an example in which a main seat 17a on which the rider sits and a tandem seat 17b on which a pillion passenger sits are provided at the seat 17. The seat 17 may be a seat for a single person. The seat 17 is disposed at a more rearward position than the head pipe 3 of the frame 2. The seat 17 is disposed above the upper rear frame 7 in a side view. The seat 17 is supported by the frame 2. An oil filler opening 18a of a fuel tank 18 is disposed at a more forward position than a front end 17f of the seat 17.

The scooter 1 includes a storage box 31 that is opened and closed by the seat 17. The storage box 31 is disposed behind the fuel tank 18. A front end portion of the seat 17 is attached to the frame 2 via a hinge 32. The seat 17 is turnable upward and downward with respect to the storage box 31 between a closed position (position shown by the solid line in FIG. 1) at which an opening 36 of the storage box 31 is closed by the seat 17 and an open position at which the opening 36 of the storage box 31 is opened. When the seat 17 is lowered to the closed position, a rear end portion of the seat 17 is locked in the frame 2 by a seat locking device 33. The locking of the seat 17 by the seat locking device 33 is released by an unlocking device in accordance with the operation of an operator.

The exterior cover includes a front cover 20 that houses an upper portion of the front fork 12. The front cover 20 includes a front center cover 21 disposed in front of the head pipe 3, a right-and-left pair of front side covers 22 that are disposed on the right side and the left side of the front center cover 21, respectively, and an inner panel 23 disposed behind the head pipe 3. The inner panel 23 corresponds to a leg shield to be disposed in front of the legs of the rider sitting on the seat 17. A front fender 24 is disposed above the front wheel Wf. A mudguard 25 corresponding to a rear fender is disposed above and behind the rear wheel Wr.

The scooter 1 includes a right-and-left pair of front pockets 34 that extend forward from the inner panel 23 and a right-and-left pair of lids 35 that open and close openings of the pair of front pockets 34, respectively. The pair of front pockets 34 are disposed on the right side and the left side of the vehicle center WO, respectively. The front pockets 34 are disposed inside the front cover 20. The front pocket 34 is disposed at a position that is further to the front than the front end 17f of the seat 17 and that is lower than the steering handle 11.

The storage space of the front pocket 34 is accessible from the rear of the front pocket 34 through the opening of the front pocket 34. The front pocket 34 includes a bottom wall portion that defines the bottom of the storage space in which goods are disposed and a tubular outer wall portion that surrounds the storage space. The outer wall portion extends obliquely rearward from the edge of the bottom wall portion. The opening of the front pocket 34 is defined by an annular upper end portion of the outer wall portion.

The scooter 1 includes a headlamp 26 that emits light forward and two front flashers 27 that flash in accordance with an operation of the rider. The scooter 1 further includes a tail lamp 28 that emits light rearward and two rear flashers 29 that flash in accordance with an operation of the rider. The headlamp 26 and the front flashers 27 are disposed further to the front than the seat 16. The tail lamp 28 and the rear flashers 29 are disposed further to the rear than a front end of the rear wheel Wr.

As shown in FIG. 2, the headlamp 26 includes a high beam lamp 60 disposed at the vehicle center WO and a right-and-left pair of low beam lamps 61 disposed on the right side and the left side of the vehicle center WO, respectively. A position lamp is included in the low beam lamp 61. An upper end portion of the high beam lamp 60 is disposed between the pair of low beam lamps 61. The high beam lamp 60 and the low beam lamp 61 are each disposed at a higher position than the front flasher 27.

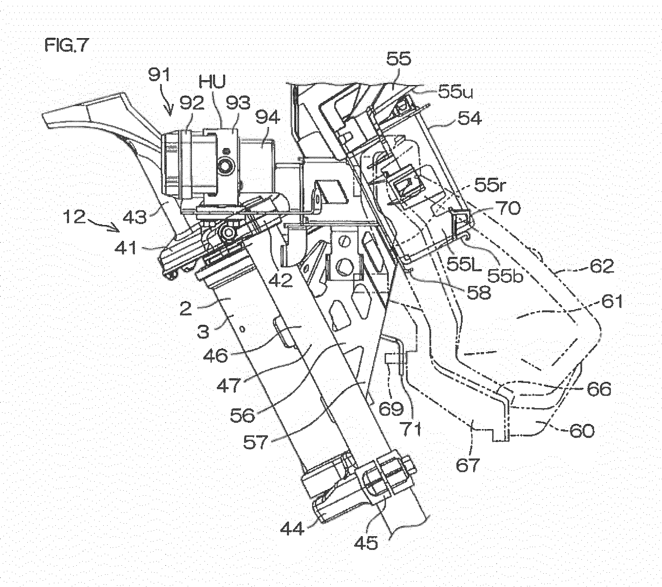

The headlamp 26 includes a lamp unit that emits light and a lamp cover 65 disposed in front of the lamp unit. The lamp unit includes a plurality of light sources 80 to 82 that emit light in accordance with the supply of electric power, a clear cover 62 through which light of the plurality of light sources 80 to 82 passes forward, and a lamp housing 66 (refer to FIG. 7) disposed behind the plurality of light sources 80 to 82 and the clear cover 62. The clear cover 62 and the lamp cover 65 are attached to the lamp housing 66. The plurality of light sources 80 to 82 are housed in a storage space defined between the clear cover 62 and the lamp housing 66.

The plurality of light sources 80 to 82 include a light source 80 for the high beam lamp 60 (hereinafter, referred to as a "high-beam light source 80"), a plurality of light sources 81 for the low beam lamps 61 (hereinafter, referred to as "low-beam light sources 81"), and a plurality of light sources 82 for the position lamp (hereinafter, referred to as "position light sources 82"). The clear cover 62 includes a high beam cover 63 through which light of the high-beam light source 80 passes forward and a pair of low beam covers 64 through which light of the low-beam light sources 81 and the position light sources 82 pass forward.

A surface of the clear cover 62 is partitioned by the lamp cover 65. The lamp cover 65 includes a right-and-left pair of partitioning portions 65b disposed between the high beam cover 63 and the low beam cover 64, a right-and-left pair of lower portions 65c disposed under the pair of low beam covers 64, respectively, and an upper portion 65a disposed over the high beam cover 63 and the low beam cover 64. The upper portion 65a is disposed behind the front center cover 21

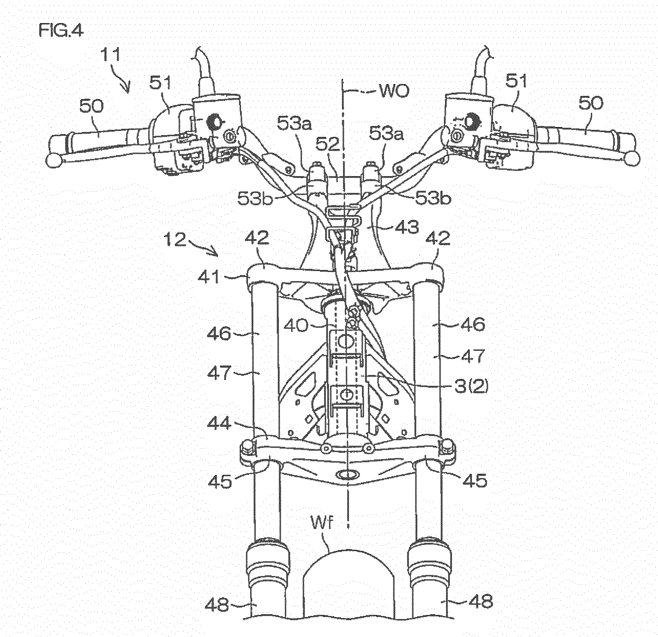

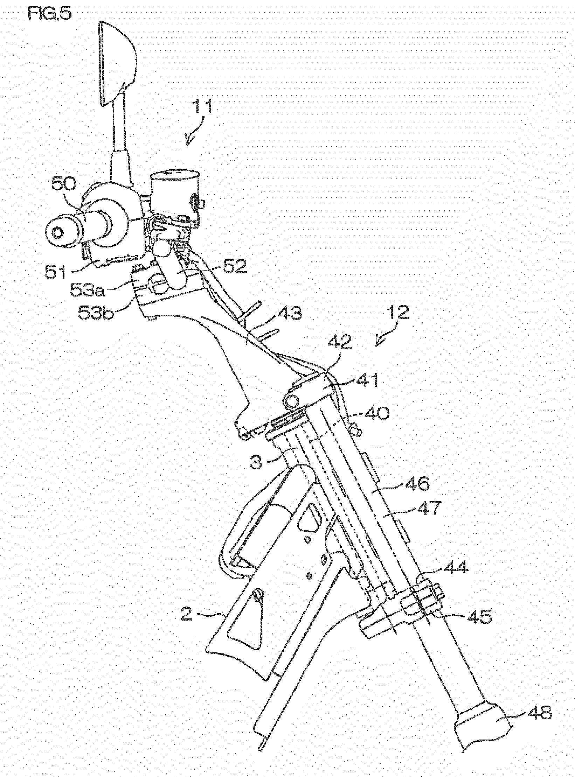

FIG. 4 and FIG. 5 are a front view and a right side view, respectively, showing the steering handle 11 and the front fork 12.

The front fork 12 is a motorcycle-type telescopic fork. As shown in FIG. 4, the front fork 12 includes a right-and-left pair of fork pipes 46 that are extensible and contractible in an axial direction of the fork pipe 46, a top bracket 41 connected to the pair of fork pipes 46, and an under bracket 44 that is disposed at a lower position than the top bracket 41 and that is connected to the pair of fork pipes 46. The front fork 12 further includes a steering shaft 40 that extends from the under bracket 44 to the top bracket 41. The steering shaft 40 is also called a steering stem.

The pair of fork pipes 46 are disposed on the right side and the left side of the vehicle center WO, respectively. The steering shaft 40 and the head pipe 3 are disposed between the pair of fork pipes 46 in a front view. The steering shaft 40 is inserted in the head pipe 3. The head pipe 3 is disposed between the top bracket 41 and the under bracket 44. As shown in FIG. 5, the fork pipe 46 and the steering shaft 40 extend obliquely forward and downward. The central line of the steering shaft 40 is disposed at a more rearward position than the central line of the fork pipe 46.

As shown in FIG. 4, the fork pipe 46 includes an outer tube 48 that extends in the axial direction of the fork pipe 46 and an inner tube 47 inserted in the outer tube 48. The outer tube 48 and the inner tube 47 are relatively movable in the axial direction of the fork pipe 46. The inner tube 47 extends upward from an upper end surface of the outer tube 48 in the axial direction of the fork pipe 46.

The top bracket 41 and the under bracket 44 are attached to the inner tube 47. The top bracket 41 and the under bracket 44 are each disposed at a higher position than the outer tube 48. The front wheel Wf is disposed between the pair of the outer tubes 48. As shown in FIG. 1, the front wheel Wf is supported by the pair of outer tubes 48 via an axle 49 attached to a lower end portion of the outer tube 48, i.e., attached to a lower end portion of the fork pipe 46. A front end 20a of the front cover 20 is disposed at a more rearward position than a front end 46a of the fork pipe 46 in a side view.

As shown in FIG. 4, the top bracket 41 includes a right-and-left pair of upper holder portions 42 attached to the pair of fork pipes 46. Likewise, the under bracket 44 includes a right-and-left pair of lower holder portions 45 attached to the pair of fork pipes 46. The top bracket 41 includes, in addition to the upper holder portions 42, a handle pedestal portion 43 that supports the steering handle 11.

The pair of upper holder portions 42 are disposed at a right end portion and a left end portion of the top bracket 41, respectively. The handle pedestal portion 43 extends upward from the central portion of the top bracket 41. The upper holder portion 42 has an annular shape that surrounds the inner tube 47. The inner tube 47 protrudes upward from the upper holder portion 42. A bolt that fixes the upper holder portion 42 to the inner tube 47 is attached to the upper holder portion 42. The inner tube 47 is tightened by the upper holder portion 42.

The steering handle 11 includes a right-and-left pair of handle grips 50 grasped by the rider, a handle bar 52 that supports the pair of handle grips 50, and a right-and-left pair of handle switches 51 operated by the rider. The central portion of the handle bar 52 is attached to the handle pedestal portion 43 of the top bracket 41 via an upper holder 53a and a lower holder 53b of a handle holder. The handle bar 52 is sandwiched by the upper holder 53a and the lower holder 53b in the up-down direction. The upper holder 53a and the lower holder 53b are fixed to the handle pedestal portion 43 by bolts.

The pair of handle grips 50 include a right grip attached to a right end portion of the handle bar 52 and a left grip attached to a left end portion of the handle bar 52. The right grip is a throttle grip that is rotatable with respect to the handle bar 52. The output of the engine 14 is adjusted in accordance with the amount of rotation of the throttle grip. The pair of handle switches 51 include a right switch disposed between the right grip and the handle holder and a left switch disposed between the left grip and the handle holder. The right and left switches are provided with a plurality of switches including a turn signal switch that flashes the front flasher 27 and the rear flasher 29.

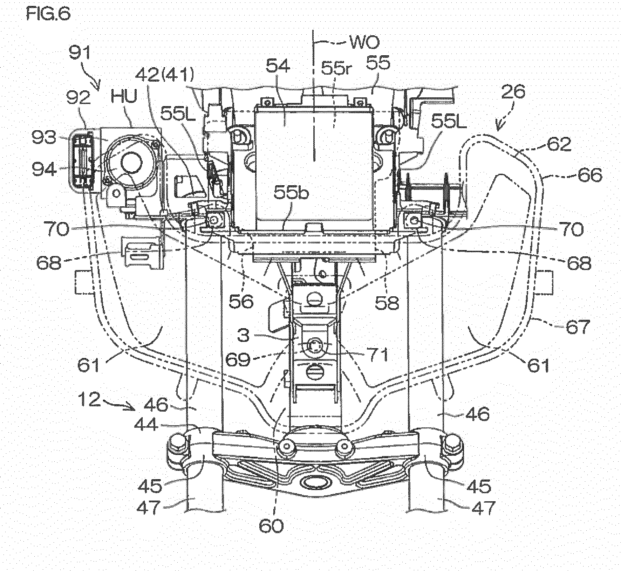

FIG. 6 and FIG. 7 are a front view and a right side view, respectively, to describe a positional relationship among the headlamp 26, a battery 54, a battery holder 55, and a front stay 56. In FIG. 6 and FIG. 7, the lamp housing 66 and the clear cover 62 of the headlamp 26 are shown by the alternate long and two short dashes line.

The scooter 1 includes the battery 54 that saves electric power to be supplied to electric apparatuses included in the scooter 1. The battery 54 is housed in the front cover 20. The battery 54 is disposed behind the front center cover 21. As shown in FIG. 6, the battery 54 is disposed in front of the head pipe 3 and the top bracket 41. The battery 54 overlaps with the head pipe 3 and with the top bracket 41 in a front view. The battery 54 is disposed at a higher position than the under bracket 44.

The lamp housing 66 includes a central portion disposed under the battery 54 in a front view. The right-and-left pair of upper end portions of the lamp housing 66 are disposed on the right side and the left side of the battery 54, respectively, in a front view. The fork pipe 46 is disposed at a more inward position in the vehicle width direction than the upper end portion of the lamp housing 66. As shown in FIG. 7, the upper end portion of the lamp housing 66 overlaps with the battery 54 in a side view.

The battery 54 is supported by the head pipe 3 via the front stay 56 and the battery holder 55. The front stay 56 extends forward from the head pipe 3. The front stay 56 is fixed to the head pipe 3. The battery holder 55 is fixed to the front stay 56. The battery 54 does not pivot rightward and leftward with respect to the head pipe 3 even if the steering handle 11 is steered rightward and leftward.

The front stay 56 includes a battery support portion 58 that supports the battery 54 via the battery holder 55, and a base portion 57 that supports the battery support portion 58. The base portion 57 extends forward from the head pipe 3. The base portion 57 is fixed to the head pipe 3. The battery support portion 58 is disposed in front of the base portion 57. The battery support portion 58 is fixed to the base portion 57.

The battery support portion 58 is disposed at a more forward position than the pair of fork pipes 46 in a side view. The battery support portion 58 is disposed at a higher position than the under bracket 44. The battery support portion 58 is disposed in front of the top bracket 41. The battery support portion 58 is away forward from the upper holder portion 42 and the handle pedestal portion 43 of the top bracket 41 in a side view. The battery support portion 58 includes a flat support surface that supports a rear surface of the battery holder 55.

The battery holder 55 includes an upper wall portion 55u disposed above the battery 54, a bottom wall portion 55b disposed under the battery 54, a right-and-left pair of sidewall portions 55L disposed on the right side and the left side of the battery 54, respectively, and a rear wall portion 55r disposed behind the battery 54. The rear wall portion 55r is disposed in front of the battery support portion 58 of the front stay 56. A rear surface of the battery holder 55 (i.e., a rear surface of the rear wall portion 55r) is disposed on a front surface of the battery support portion 58. The battery 54 is put into the battery holder 55 from the front of the battery holder 55.

As shown in FIG. 6, the battery holder 55 includes a right-and-left pair of upper lamp-supporting portions 70 that supports the headlamp 26. The upper lamp-supporting portion 70 extends outward in the vehicle width direction from the sidewall portion 55L of the battery holder 55. The pair of upper lamp-supporting portions 70 are disposed on the right side and the left side of the vehicle center WO, respectively. The battery 54 is disposed between the pair of upper lamp-supporting portions 70 in a front view. The upper lamp-supporting portion 70 is disposed in front of the fork pipe 46, and overlaps with the fork pipe 46 in a front view.

As shown in FIG. 7, the front stay 56 includes, in addition to the battery support portion 58 and the base portion 57, a lower lamp-supporting portion 71 that supports the headlamp 26. The lower lamp-supporting portion 71 is disposed in front of the base portion 57. The lower lamp-supporting portion 71 is fixed to the base portion 57. The lower lamp-supporting portion 71 is disposed below the battery support portion 58. The lower lamp-supporting portion 71 is disposed at a lower position than the upper lamp-supporting portion 70 of the battery holder 55.

The lower lamp-supporting portion 71 is disposed at a more forward position than the pair of fork pipes 46 in a side view. The lower lamp-supporting portion 71 is disposed at a higher position than the under bracket 44 and at a lower position than the top bracket 41. As shown in FIG. 6, the lower lamp-supporting portion 71 is disposed in front of the head pipe 3. The lower lamp-supporting portion 71 is disposed between the pair of fork pipes 46 in a front view. The lower lamp-supporting portion 71 is disposed below the battery 54.

The lamp housing 66 includes a housing portion 67 to which the clear cover 62 is attached, a right-and-left pair of upper supported portions 68 supported by the head pipe 3 via the battery holder 55 and the front stay 56, and a lower supported portion 69 supported by the head pipe 3 via the front stay 56. The upper supported portion 68 is disposed at a higher position than the lower supported portion 69. The pair of upper supported portions 68 are disposed on the right side and the left side of the vehicle center WO, respectively. The lower supported portion 69 is disposed at and overlapped with the vehicle center WO. The upper supported portion 68 protrudes upward from the housing portion 67. As shown in FIG. 7, the lower supported portion 69 protrudes rearward from the housing portion 67.

The upper supported portion 68 of the lamp housing 66 is disposed in front of the upper lamp-supporting portion 70 of the battery holder 55. The upper supported portion 68 is connected to the upper lamp-supporting portion 70 via a grommet made of rubber or resin using a bolt and a nut. On the other hand, the lower supported portion 69 of the lamp housing 66 is a support shaft that protrudes rearward from the housing portion 67 of the lamp housing 66. The lower lamp-supporting portion 71 of the front stay 56 is a support hole that passes through the front stay 56 in the front-rear direction. The lower supported portion 69 is inserted into the lower lamp-supporting portion 71 via a grommet made of rubber or resin. The lower supported portion 69 is supported by the lower lamp-supporting portion 71 via the grommet.

Next, an ABS (Antilock Brake System) will be described.

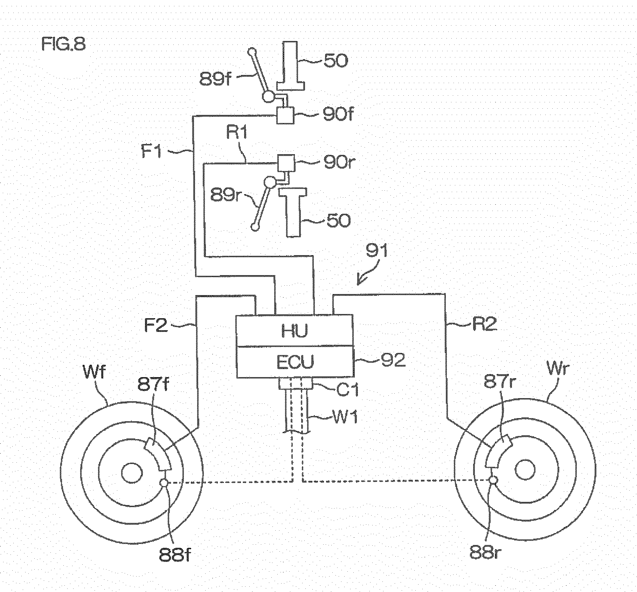

FIG. 8 is a conceptual diagram to describe the ABS. The scooter 1 includes a hydraulic front brake 87f that applies a braking force to the front wheel Wf, a hydraulic rear brake 87r that applies a braking force to the rear wheel Wr and the ABS that controls the lock of the front wheel Wf and the rear wheel Wr by controlling oil pressure applied to the front brake 87f and the rear brake 87r. The front brake 87f may be a disc brake or may be a drum brake. The same applies to the rear brake 87r.

The scooter 1 further includes a front brake lever 89f that is to be operated by the rider' hand to cause the front brake 87f to generate the braking force and a front master cylinder 90f that activates the front brake 87f in accordance with the operation of the front brake lever 89f. Similarly, the scooter 1 further includes a rear brake lever 89r that is to be operated by rider' hand to cause the rear brake 87r to generate the braking force and a rear master cylinder 90r that activates the rear brake 87r to operate in accordance with the operation of the rear brake lever 89r. The scooter 1 may include a brake pedal that is to be operated by the rider' foot instead of the rear brake lever 89r

The front brake 87f and the rear brake 87r are attached to the front wheel Wf and the rear wheel Wr, respectively. The front brake lever 89f and the front master cylinder 90f are disposed in front of the right handle grip 50. The rear brake lever 89r and the rear master cylinder 90r are disposed in front of the left handle grip 50. The front brake lever 89f is connected to the front master cylinder 90f and the rear brake lever 89r is connected to the rear master cylinder 90r.

The ABS includes a front speed sensor 88f that detects the rotation speed of the front wheel Wf, a rear speed sensor 88r that detects the rotation speed of the rear wheel Wr and an ABS unit 91 that controls the oil pressure to be applied to the front brake 87f and the rear brake 87r based on detection values of the front speed sensor 88f and the rear speed sensor 88r. The front speed sensor 88f and the rear speed sensor 88r are attached to the front wheel Wf and the rear wheel Wr, respectively. The ABS unit 91 is attached to the frame 2.

The ABS unit 91 includes a hydraulic unit HU that varies the oil pressure to be applied to the front brake 87f and the rear brake 87r and an ECU (Electronic Control Unit) 92 that controls the hydraulic unit HU based on the detection values of the front speed sensor 88f and the rear speed sensor 88r. The ECU 92 is attached to the hydraulic unit HU and the hydraulic unit HU is attached to the frame 2.

The ABS includes brake hoses F1, F2, R1 and R2 that transmit the oil pressure between the front and rear master cylinders 90f and 90r and the front and rear brakes 87f and 87r. The brake hoses include a brake hose F1 that connects the front master cylinder 90f and the hydraulic unit HU with each other and a brake hose F2 that connects the hydraulic unit HU and the front brake 87f with each other. The brake hoses further include a brake hose R1 that connects the rear master cylinder 90r and the hydraulic unit HU with each other and a brake hose R2 that connects the hydraulic unit HU and the rear brake 87r with each other.

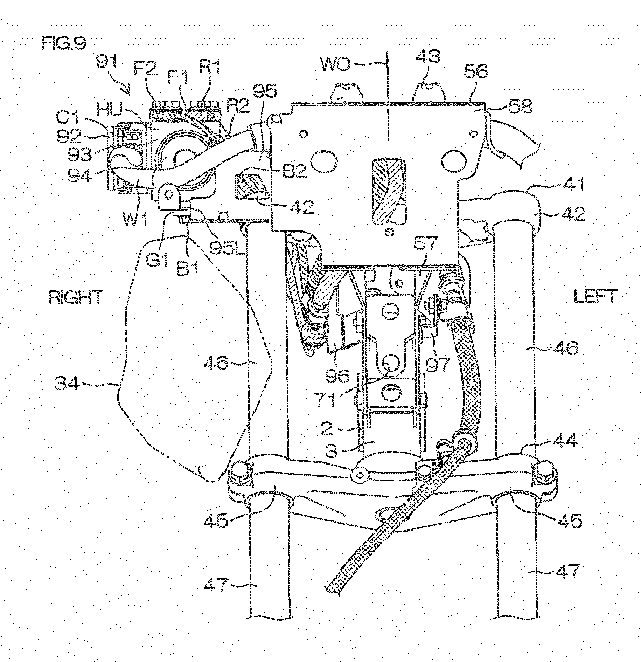

The hydraulic unit HU includes a housing 93 (refer to FIGS. 9 to 11) that defines oil passages interposed between the front and rear master cylinders 90f and 90r and the front and rear brakes 87f and 87r. The hydraulic unit HU further includes a solenoid-operated valve embedded in the housing 93, a pump that supplies brake oil to the oil passages of the housing 93 and an electric motor 94 (refer to FIGS. 9 to 11) that drives the pump.

The ECU 92 controls the solenoid-operated valve of the hydraulic unit HU and the electric motor 94 of the hydraulic unit HU based on the detection values of the front speed sensor 88f and the rear speed sensor 88r. Thus, the braking forces to be applied to the front wheel Wf and the rear wheel Wr are adjusted and the lock of the front wheel Wf and the rear wheel Wr are controlled. The detection values of the front speed sensor 88f and the rear speed sensor 88r may be input directly from each of the front and rear speed sensors 88f and 88r to the ECU 92, or may be input to the ECU 92 via a main ECU that controls the scooter 1.

The ABS includes a wire harness W1 that transmits electrical signals to be input to the ECU 92 and electrical signals sent out from the ECU 92. Wires to transmit the detection values of the front speed sensor 88f and the rear speed sensor 88r to the ECU 92 are included in the wire harness W1. The wire harness W1 is connected to the ECU 92 via a connector C1.

FIGS. 9 to 11 are, respectively, a front view, a right side view and a plan view showing the ABS unit 91 including the hydraulic unit HU.

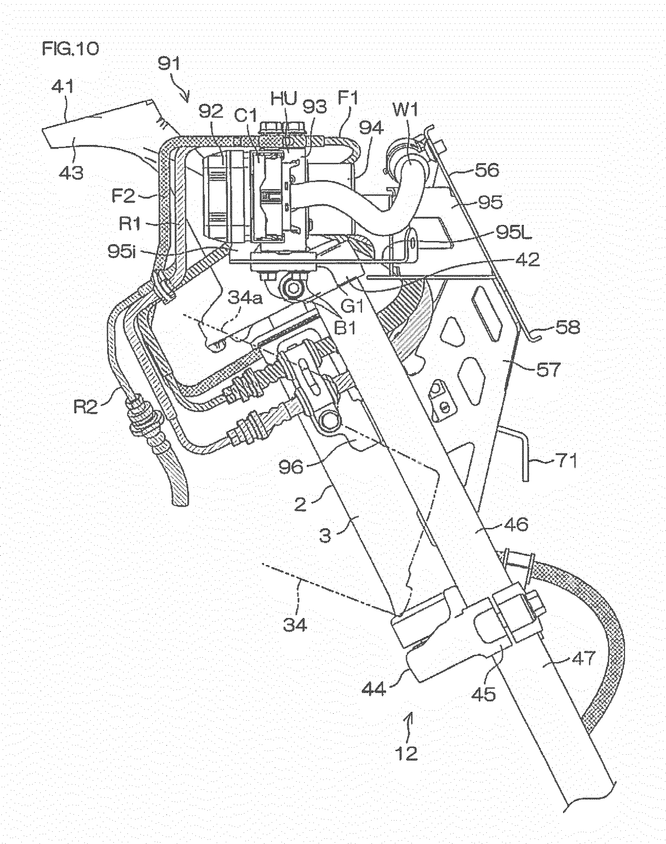

FIGS. 9 to 11 show states in which the front fork 12 is at a straight-traveling position between a rightward maximum steering position and a leftward maximum steering position. In FIGS. 9 to 11, hatching lines are depicted to show the brake hose F1, the brake hose F2, the brake hose R1 and the brake hose R2. In FIGS. 9 and 10, the outline of the right front pockets 34 is shown by the alternate long and two short dashes lines.

As shown in FIG.9, the ABS unit 91 is disposed on the right side of the vehicle center WO. The ABS unit 91 is disposed at a more outward position in the vehicle width direction than the head pipe 3. The ABS unit 91 is disposed at a higher position than the under bracket 44. The ABS unit 91 is disposed over the right front pockets 34. The ABS unit 91 is disposed over the right low beam lamp 61 in a front view (refer to FIG. 2). The ABS unit 91 is disposed behind the lamp housing 66 and overlaps the lamp housing 66 in a front view (refer to FIG. 6).

As shown in FIG.10, an upper surface of the front pockets 34 includes an inclined portion 34a that extends obliquely forward and downward in a side view. The inclined portion 34a of the front pockets 34 is disposed under the ABS unit 91. The front pockets 34 overlaps the top bracket 41, the head pipe 3 and the fork pipe 46 in a side view. The front pockets 34 is disposed outward of the front fork 12 in the vehicle width direction.

The ABS unit 91 overlaps the handle pedestal portion 43 of the top bracket 41 in a side view. The ABS unit 91 is disposed outward of the top bracket 41 in the vehicle width direction. The ABS unit 91 is disposed at a lower position than the upper end of the handle pedestal portion 43 which corresponds to the upper end of the top bracket 41. The ABS unit 91 is disposed at a higher position than the upper end of the head pipe 3. The ABS unit 91 is disposed further to the rear than the rear end of the under bracket 44.

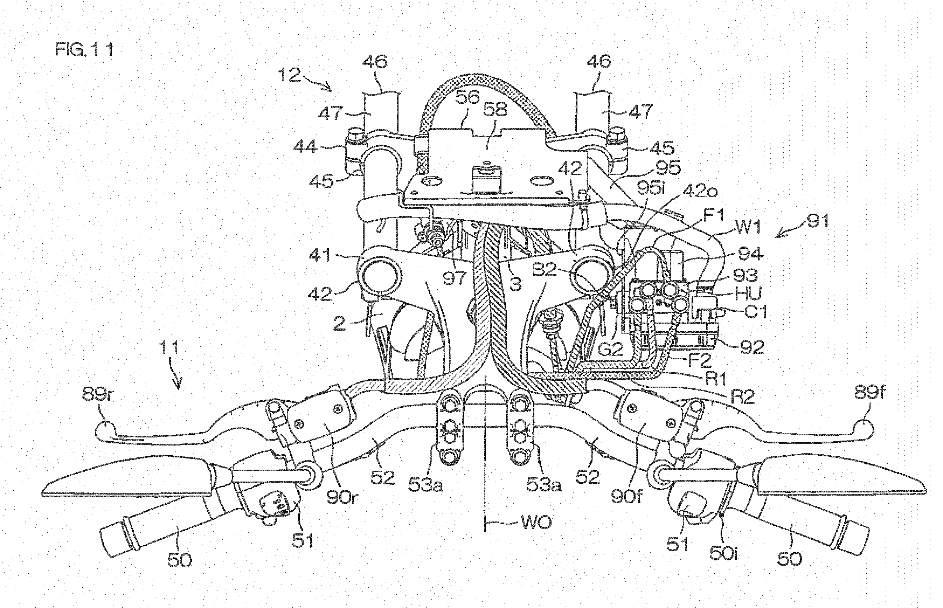

As shown in FIG.11, the ABS unit 91 is disposed in front of the steering handle 11 in a plan view. The ABS unit 91 is disposed in front of the front master cylinder 90f in a plan view. The ABS unit 91 is disposed at a more inward position in the vehicle width direction than the inner end 50i of the handle grip 50 in the vehicle width direction in a plan view. The ABS unit 91 is disposed at a more outward position in the vehicle width direction than the outer end 42o of the upper holder portion 42 in the vehicle width direction in a plan view.

The ECU 92 of the ABS unit 91 is disposed behind the housing 93 of the hydraulic unit HU. The electric motor 94 of the hydraulic unit HU is disposed in front of the housing 93. The rotation axis of the electric motor 94 extends in the front-rear direction. The connector C1 is disposed outward of the housing 93 in the vehicle width direction. The connector C1 is disposed in front of the ECU 92. The location of the ECU 92 with respect to the housing 93 is not limited thereto. The same applies to the locations of the electric motor 94 and the connector C1 with respect to the housing 93.

As shown in FIG.10, the front stay 56 includes, in addition to the base portion 57, the battery supporting portion 58 and the lower lamp-supporting portion 71, an HU supporting portion 95 that supports the hydraulic unit HU. The HU supporting portion 95 extends rearward from the battery supporting portion 58. The HU supporting portion 95 is disposed behind the battery supporting portion 58 in a side view. The HU supporting portion 95 is disposed at a higher position than the lower lamp-supporting portion 71.

The HU supporting portion 95 includes a lower plate 95L that is disposed under the hydraulic unit HU in a horizontal posture. The lower plate 95L overlaps the upper holder portion 42 and the handle pedestal portion 43 in a side view. The lower plate 95L is disposed outward of the top bracket 41 in the vehicle width direction. The lower plate 95L is connected to the hydraulic unit HU via a grommet G1 made of rubber or resin using bolts B1. The head portions of the bolts B1 are disposed under the lower plate 95L and the shaft portions of the bolts B1 penetrate the lower plate 95L in the up-down direction.

As shown in FIG.11, the HU supporting portion 95 further includes an inner plate 95i that is disposed inward of the hydraulic unit HU in the vehicle width direction in a vertical posture. The inner plate 95i is disposed between the right upper holder portion 42 and the hydraulic unit HU. The rear end of the inner plate 95i is disposed further to the rear than the upper holder portion 42. The inner plate 95i extends upward from the inner end portion of the lower plate 95L. The inner plate 95i is connected to the hydraulic unit HU via a grommet G2 made of rubber or resin using bolts B2. The head portions of the bolts B2 are disposed inward of the inner plate 95i in the vehicle width direction and the shaft portions of the bolts B2 penetrate the inner plate 95i in the vehicle width direction.

The first end of the wire harness W1 is connected to the ECU 92 via the connector C1. The second end of the wire harness W1 is connected to an electrical device (the main ECU, for example) other than the ECU 92. The wire harness W1 passes through a position in front of the electric motor 94 in the vehicle width direction. The wire harness W1 extends from a position on the right side of the vehicle center WO to a position on the left side of the vehicle center WO through a position between the top bracket 41 of the front fork 12 and the battery supporting portion 58 of the front stay 56. The wire harness W1 passes through a position over the HU supporting portion 95.

The first end portions of the brake hoses F1, F2, R1 and R2 are disposed over the housing 93 of the hydraulic unit HU and connected to the housing 93. The brake hose F1 extends forward from the hydraulic unit HU in a plan view. The remaining brake hoses R1, F2 and R2 extend rearward from the hydraulic unit HU in a plan view.

The brake hose F1 passes through rearward a position on the inner side of the hydraulic unit HU in a plan view. The brake hose R1 turns inward at a position behind the hydraulic unit HU in a plan view. As shown in FIG. 10, portions of the brake hose F1 and the brake hose R1 are disposed on the right side of the head pipe 3. The brake hose F1 and the brake hose R1 are connected to the head pipe 3 using a right stay 96. The brake hose F1 and the brake hose R1 pass through a position between the top bracket 41 and the under bracket 44 and a position between the pair of fork pipes 46 in the front-rear direction.

As shown in FIG. 11, the brake hose F1 and the brake hose R1 pass through a space between the top bracket 41 and the front stay 56 in the up-down direction. The brake hose F1 and the brake hose R1 extend in the up-down direction at a position in front of the handle pedestal portion 43. The brake hose F1 extends rightward from the handle pedestal portion 43 and the brake hose R1 extends leftward from the handle pedestal portion 43. The second end portion of the brake hose F1 is connected to the front master cylinder 90f. The second end portion of the brake hose R1 is connected to the rear master cylinder 90r.

The brake hose F2 turns inward at a position behind the hydraulic unit HU in a plan view. The brake hose F2 extends from a position on the right side of the vehicle center WO to a position on the left side of the vehicle center WO through a position behind the top bracket 41. As shown in FIG. 9, a portion of the brake hose F2 is disposed on the left side of the head pipe 3. The brake hose F2 is connected to the head pipe 3 using a left stay 97. The brake hose F2 passes through a position between the top bracket 41 and the under bracket 44 and a position between the pair of fork pipes 46 in the front-rear direction. The brake hose F2 extends downward from the under bracket 44. The second end portion of the brake hose F2 is connected to the front brake 87f.

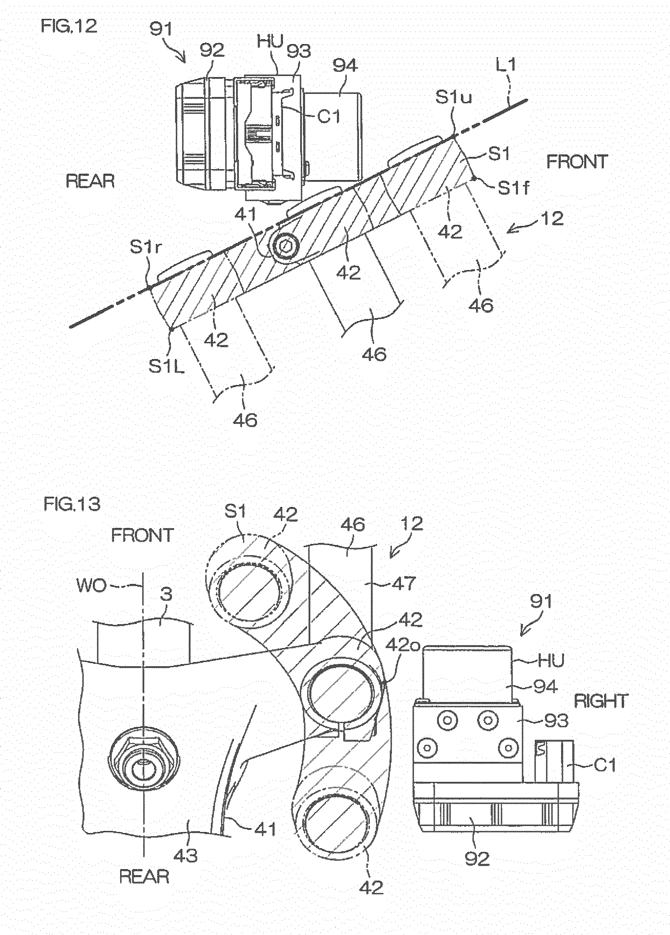

FIGS. 12 and 13 are, respectively, a right side view and a plan view to describe the position of the ABS unit 91 with respect to a pass-through space S1 through which the top bracket 41 passes in accordance to the turn of the front fork 12.

In FIG. 12, the "right" fork pipe 46 is shown by the alternate long and short dash lines when the front fork 12 is at the "rightward" maximum steering position, and the "left" fork pipe 46 is shown by the alternate long and two short dashes lines when the front fork 12 is at the "rightward" maximum steering position.

In FIG. 13, the "right" fork pipe 46 is shown by the alternate long and short dash lines when the front fork 12 is at the "rightward" maximum steering position, and the "right" fork pipe 46 is shown by the alternate long and two short dashes lines when the front fork 12 is at the "leftward" maximum steering position.

The rightward maximum steering position of the front fork 12 is a position symmetrical to the leftward maximum steering position of the front fork 12 with respect to the vehicle center WO. When the front fork 12 is disposed at the leftward maximum steering position, the right fork pipe 46 is disposed at a position shown by the alternate long and two short dashes lines in FIG. 12, and the left fork pipe 46 is disposed at a position shown by the alternate long and short dash lines in FIG. 12.

When the steering handle 11 turns rightward, the right fork pipe 46 moves rearward while moving rightward and the left fork pipe 46 moves forward while moving rightward. In contrast, when the steering handle 11 turns leftward, the right fork pipe 46 moves forward while moving leftward and the left fork pipe 46 moves rearward while moving leftward.

When the front fork 12 moves from the rightward maximum steering position to the leftward maximum steering position, the pair of upper holder portions 42 of the top bracket 41 move in the vehicle width direction while moving in the front-rear direction. In FIGS. 12 and 13, hatching lines are depicted to show the pass-through space S1 through which the upper holder portion 42 passes when the front fork 12 moves from the rightward maximum steering position to the leftward maximum steering position. Also, in FIG. 12, a thick alternate long and two short dashes line represents a virtual straight line L1 including the upper edge of the pass-through space S1.

As shown in FIG. 13, in a not claimed aspect, the ABS unit 91 is disposed outward of the pass-through space S1 in the vehicle width direction in a plan view and does not overlaps the pass-through space S1 in a plan view. As shown in FIG. 12, an entire of the ABS unit 91 is disposed at a position further to the rear than the front end S1f of the pass-through space S1 and further to the front than the rear end S1r of the pass-through space S1 in a side view. Moreover, the lower portion of the ABS unit 91 is disposed at a position lower than the upper end S1u of the pass-through space S1 and higher than the lower end S1L of the pass-through space S1 in a side view. The entire of the ABS unit 91 is disposed above the virtual straight line L1 in a side view. The upper holder portion 42 does not contact with the ABS unit 91 when the front fork 12 is disposed at any position.

As described above, in the embodiment, a motorcycle-type front fork 12 is included in the scooter 1. The pair of fork pipes 46 of the front fork 12 are connected to the pair of upper holder portions 42 of the top bracket 41, respectively. When the front fork 12 turns rightward and leftward with respect to the head pipe 3 between the rightward maximum steering position and the leftward maximum steering position, the pair of upper holder portions 42 move in the front-rear direction while moving in the vehicle width direction. The pass-through space S1 represents a space through which the upper holder portion 42 passes when the front fork 12 moves from the rightward maximum steering position to the leftward maximum steering position.

At least a portion of the hydraulic unit HU of the ABS is disposed over the pass-through space S1 in a side view of the scooter 1. That is, the hydraulic unit HU is not disposed laterally of the front fork 12, but is disposed over the pass-through space S1 in a side view of the scooter 1. Thus, the hydraulic unit HU can be moved toward the vehicle center WO, so that it is possible to prevent or minimize the enlargement of the front cover 20, which houses the upper portion of the front fork 12 and the hydraulic unit HU, in the vehicle width direction.

Additionally, at least a portion of the hydraulic unit HU is disposed at a position that is further to the rear than the front end S1f of the pass-through space S1 and that is further to the front than the rear end S1r of the pass-through space S1 in a side view of the scooter 1. Thus, it is possible to prevent or minimize the enlargement of the front cover 20 in the front-rear direction. Moreover, at least a portion of the hydraulic unit HU is disposed at a position lower than the upper end S1u of the pass-through space S1 in a side view of the scooter 1. That is, the hydraulic unit HU is moved in the up-down direction toward the pass-through space S1. Thus, it is possible to minimize the enlargement of the front cover 20 in the up-down direction.

In the preferred embodiment, the head lamp 26 is supported by the front stay 56 extending forward from the head pipe 3. The front stay 56 includes, in addition to the lamp-supporting portion that supports the head lamp 26, the HU supporting portion 95 that supports the hydraulic unit HU. Thus, the front cover 20 can be downsized as compared with a case in which a stay that supports the head lamp 26 and a stay that supports the hydraulic unit HU are independent from each other.

In the preferred embodiment, the battery 54 is housed in the front cover 20. The front stay 56 includes, in addition to the lamp-supporting portion and the HU supporting portion 95, the battery supporting portion 58 that supports the battery 54. That is, the battery supporting portion 58, the lamp-supporting portion and the HU supporting portion 95 are provided with the same stay. Thus, the front cover 20 can be downsized as compared with a case in which a stay that supports the battery 54, a stay that supports the head lamp 26 and a stay that supports the hydraulic unit HU are independent from each other.

In the preferred embodiment, the storage box 31 to house goods is disposed under the seat 17. The storage box 31 includes an opening 36 provided in the upper end portion of the storage box 31 and a storage space accessible from above the storage box 31 through the opening 36. Meanwhile, the battery 54 is disposed inside the front cover 20. If the battery 54 is disposed close to the storage box 31, the battery 54 could limit the shape and the size of the storage box 31. Thus, the capacity of the storage box 31 can be increased by disposing the battery 54 inside the front cover 20.

In the preferred embodiment, the head lamp 26 is supported by the front stay 56 extending forward from the head pipe 3. The front stay 56 includes, in addition to the lamp-supporting portion that supports the head lamp 26, the battery supporting portion 58 that supports the battery 54. Thus, the front cover 20 can be downsized as compared with a case in which a stay that supports the head lamp 26 and a stay that supports the battery 54 are independent from each other.

In the preferred embodiment, the front pocket 34 to house goods is disposed outward of the front fork 12 in the vehicle width direction. If the hydraulic unit HU is disposed outward of the front pocket 34 in the vehicle width direction, the front cover 20 would be enlarged in the vehicle width direction. The hydraulic unit HU is not disposed laterally of the front pocket 34, but is disposed over the front pocket 34. Thus, the front cover 20 can be prevented from enlarging in the vehicle width direction.

In the preferred embodiment, the inclined portion 34a provided in the upper surface of the front pocket 34 extends obliquely forward and downward in a side view of the scooter 1. A space over the front pocket 34 includes a large region that enlarges in the up-down direction as the front end of the inclined portion 34a is approached. A portion or a whole of the hydraulic unit HU is disposed in this large region. Thus, the space inside the front cover 20 can be utilized efficiently and the enlargement of the front cover 20 can be prevented or minimized.

In the preferred embodiment, the brake hoses F1, F2 and R1 to transmit oil pressure pass through a space between the pair of fork pipes 46. That is, the space between the pair of fork pipes 46 is utilized as a space in which a portion of the brake hoses F1, F2 and R1 are disposed. Thus, the space inside the front cover 20 can be utilized efficiently and the enlargement of the front cover 20 can be prevented or minimized.

In the preferred embodiment, the brake hoses F1, F2 and R1 pass through not only the space between the pair of fork pipes 46, but also a space between the top bracket 41 and the under bracket 44. Thus, the space inside the front cover 20 can be utilized efficiently and the enlargement of the front cover 20 can be prevented or minimized.

In the preferred embodiment, the wire harness W1 of the ABS passes through a space between the front fork 12 and the front stay 56. That is, the space between the front fork 12 and the front stay 56 is utilized as a space in which a portion of the wire harness W1 is disposed. Thus, the space inside the front cover 20 can be utilized efficiently and the enlargement of the front cover 20 can be prevented or minimized.

In the preferred embodiment, the hydraulic unit HU is disposed on the right side of the vehicle center WO. The first end of the wire harness W1 is connected to the hydraulic unit HU. The wire harness W1 extends from the position on the right side of the vehicle center WO to the position on the left side of the vehicle center WO. Thus, an electrical device connected to the second end of the wire harness W1 is disposed on the left side of the vehicle center WO. The muffler 19 to guide exhaust gas of high temperature is disposed on the right side of the vehicle center WO. Thus, the electrical device connected to the second end of the wire harness W1 can be separated in the vehicle width direction from the high temperature device, i.e., the muffler 19.

In the preferred embodiment, the inner end 50i of the handle grip 50 in the vehicle width direction is disposed at a more outward position than the outer end of the hydraulic unit HU in the vehicle width direction. In other words, the hydraulic unit HU is approached to the vehicle center WO to achieve this. Thus, the enlargement of the front cover 20 in the vehicle width direction is prevented or minimized.

### Other Preferred Embodiments

Although preferred embodiments have been described above, various modifications of the embodiments are possible.

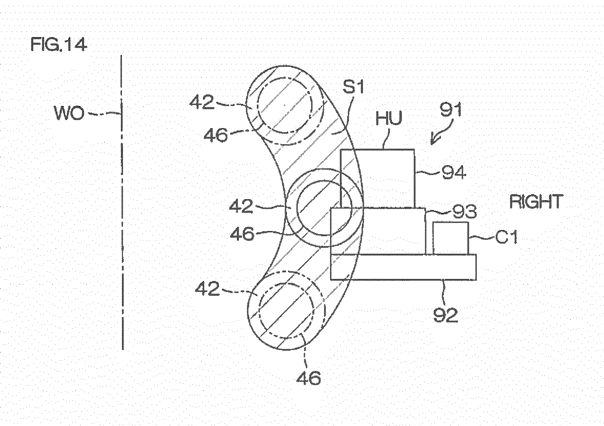

For example, the position of the ABS unit 91 is not limited to the examples described above. The ABS unit 91 may be disposed on the left side of the vehicle center WO. A portion or a whole of the ABS unit 91 may be disposed at a more outward position in the vehicle width direction than the inner end 50i of the handle grip 50 in the vehicle width direction in a plan view. According to the invention, as shown in FIG. 14, the ABS unit 91 overlaps the pass-through space S1 in a plan view. According to this arrangement, the ABS unit 91 is approached to the vehicle center WO so that the ABS unit 91 overlaps the pass-through space S1 in a plan view, and thus the enlargement of the front cover 20 in the vehicle width direction is prevented or minimized.

The brake hoses may not pass through a space between the pair of fork pipes 46. The brake hoses may not pass through a space between the top bracket 41 and the under bracket 44. The brake hoses may not be connected to the head pipe 3 using the right stay 96 or the left stay 97.

The battery 54 may be disposed at a position other than the internal space of the front cover 20.

When the seat 17 is located at the closed position, the oil filler opening 18a of the fuel tank 18 may be disposed below the seat 17, or may be disposed behind the seat 17.

The scooter 1, which is an example of a straddled vehicle, may not include at least one of the storage box 31 and the front pockets 34.

The straddled vehicle is not limited to a scooter type motorcycle in which the engine 14, which is an example of a power source, is swingable with respect to the frame 2, but may be an underbone type motorcycle in which the power source is fixed to the frame 2. Also the straddled vehicle is not limited to a motorcycle, but may be a vehicle including not less than 3 wheels or an all-terrain vehicle.

## Claims

1. A straddled vehicle (1) comprising:
a front wheel (Wf);
a front fork (12) that supports the front wheel (Wf);
a head pipe (3) that supports the front fork (12) such that the front fork (12) is provided to turn rightward and leftward between a rightward maximum steering position and a leftward maximum steering position;
an ABS including a hydraulic unit (HU) configured to control a braking force to be applied to the front wheel (Wf); and
a front cover (20) that houses an upper portion of the front fork (12) and the hydraulic unit (HU); wherein
the front fork (12) includes:
a pair of fork pipes (46) that are disposed on a right side and a left side of a vehicle center (WO), respectively;
a steering shaft (40) that is inserted in the head pipe (3);
a top bracket (41) that is connected to the pair of fork pipes (46) and the steering shaft (40); and
an under bracket (44) that is disposed at a lower position than the top bracket (41) and that is connected to the pair of fork pipes (46) and the steering shaft (40);
the top bracket (41) includes a pair of upper holder portions (42) into which the pair of fork pipes (46) are inserted, respectively and disposed on the right side and the left side of the vehicle center (WO), respectively,
the upper holder portion (42) of the top bracket (41) is configured to move in a front-rear direction of the straddled vehicle (1) and passes through a pass-through space (S1) in accordance with the turn of the front fork (12) between the rightward maximum steering position and the leftward maximum steering position,
the hydraulic unit (HU) is entirely disposed at a more outward position in a width direction of the straddled vehicle (1) than the head pipe (3), and
at least a portion of the hydraulic unit (HU) is disposed at a lower position than an upper end (S1u) of the pass-through space (S1) in a side view of the straddled vehicle (1),
**characterized in that**
said at least a portion of the hydraulic unit (HU) is disposed over the pass-through space (S1) in a side view of the straddled vehicle (1), wherein the hydraulic unit (HU) overlaps the pass-through space (S1) in a plan view of the straddled vehicle (1).

2. A straddled vehicle (1) according to claim 1, **characterized by** a front stay (56) that extends forward from the head pipe (3) and a head lamp (26) that is supported by the front stay (56).

3. A straddled vehicle (1) according to claim 2, **characterized in that** the front stay (56) includes a lamp-supporting portion (71) that supports the head lamp (26) and an HU supporting portion (95) that supports the hydraulic unit (HU).

4. A straddled vehicle (1) according to claim 3, **characterized by** a battery (54) that is disposed inside the front cover (20).

5. A straddled vehicle (1) according to claim 4, **characterized in that** the front stay (56) further includes a battery supporting portion (58) that supports the battery (54).

6. A straddled vehicle (1) according to any one of the claims 4 or 5, **characterized by** a seat (17) configured for a rider to sit on, a storage box (31) that is disposed under the seat (17).

7. A straddled vehicle (1) according to any one of claim 2 to 6, **characterized in that** the ABS further includes an ECU (92) that is attached to the hydraulic unit (HU) and a wire harness (W1) configured to transmit electrical signals to the ECU (92), and
the wire harness (W1) passes through a space between the front fork (12) and the front stay (56).

8. A straddled vehicle (1) according to any one of claim 7, **characterized by** an engine (14) configured to generate a motive power to cause the straddled vehicle (1) to travel and a muffler (19) configured to discharge exhaust gas generated in the engine (14) to the atmosphere; wherein
the muffler (19) and the hydraulic unit (HU) are disposed on the right side of the vehicle center (WO), and
the wire harness (W1) extends from a position on the right side of the vehicle center (WO) to a position on the left side of the vehicle center (WO).

9. A straddled vehicle (1) according to any one of claim 1 to 8, **characterized by** a front pocket (34) configured to house goods and that is disposed outward of the front fork (12) in the width direction of the straddled vehicle (1); wherein
the hydraulic unit (HU) is disposed over the front pocket (34).

10. A straddled vehicle (1) according to claim 9, **characterized in that** an upper surface of the front pocket (34) includes an inclined portion (34a) that is disposed under the hydraulic unit (HU) and extends obliquely forward and downward in a side view of the straddled vehicle (1).

11. A straddled vehicle (1) according to any one of claim 1 to 10, **characterized in that** the ABS further includes a brake hose (F1, F2) that extends from the hydraulic unit (HU) and is configured to transmit oil pressure, and
the brake hose (F1, F2) passes through a space between the pair of fork pipes (46).

12. A straddled vehicle (1) according to claim 11, wherein the brake hose (F1, F2) passes through a space between the top bracket (41) and the under bracket (44).

13. A straddled vehicle (1) according to any one of claim 1 to 12, **characterized by** a pair of handle grips (50) that are disposed on the right side and the left side of the vehicle center (WO), respectively and that are configured to be grasped by a rider when the front fork (12) is turned rightward and leftward; wherein
the hydraulic unit (HU) is disposed at a more inward position in the width direction of the straddled vehicle (1) than an inner end (50i) of the handle grip (50).

## Patentansprüche

1. Ein Spreiz-Sitz-Fahrzeug (1), das umfasst:
ein Vorder-Rad (Wf);
eine Vorder-Gabel (12), die das Vorder-Rad (Wf) lagert;
ein Kopf-Rohr (3), das die Vorder-Gabel (12) lagert, so dass die Vorder-Gabel (12) vorgesehen ist, um nach rechts und links zwischen einer rechts gerichteten Maximal-Lenk-Position und einer links gerichteten Maximal-Lenk-Position zu drehen;
ein ABS, das eine Hydraulik-Einheit (HU) beinhaltet, die konfiguriert ist, um eine Brems-Kraft, die auf das Vorder-Rad (Wf) aufzubringen ist, zu steuern; und
eine Vorder-Abdeckung (20), die einen oberen Abschnitt der Vorder-Gabel (12) und die Hydraulik-Einheit (HU) aufnimmt; wobei
die Vorder-Gabel (12) beinhaltet:
ein Paar von Gabel-Rohren (46), die jeweils an einer rechten Seiten und an einer linken Seite von einer Fahrzeug-Mitte (WO) positioniert sind;
eine Lenk-Welle (40), die in das Kopf-Rohr (3) eingesetzt ist;
eine Oben-Klammer (41), die mit dem Paar von Gabel-Rohren (46) und der Lenk-Welle (40) verbunden ist; und
eine Unten-Klammer (44), die an einer niedrigeren Position als die Oben-Klammer (41) positioniert ist, und die das Paar von Gabel-Rohren (46) und die Lenk-Welle (40) verbindet;
die Oben-Klammer (41) beinhaltet ein Paar von oberen Halter-Abschnitten (42), in die das Paar von Gabel-Rohren (46) jeweils eingesetzt sind, und jeweils an der rechten Seite und der linken Seite von Fahrzeug-Mitte (WO) positioniert sind,
der obere Halter-Abschnitt (42), der Oben-Klammer (41) ist konfiguriert um in eine Vorder-Rück-Richtung des Spreiz-Sitz-Fahrzeugs (1) zu bewegen, und durch einen Durchtritts-Raum (S1), in Übereinstimmung mit der Drehung der Vorder-Gabel (12) zwischen der rechts gerichteten Maximal-Lenk-Position und der links gerichteten Maximal-Lenk-Position, hindurchzutreten,
die Hydraulik-Einheit (HU) ist, in einer Breiten-Richtung des Spreiz-Sitz-Fahrzeugs (1), vollständig an einer weiter außenliegenden Position in als das Kopf-Rohr (3) positioniert, und
zumindest ein Teil der Hydraulik-Einheit (HU) ist, in einer Seitenansicht des Spreiz-Sitz-Fahrzeugs (1), an einer niedrigen Position als ein oberes Ende (S1u) des Durchtritts-Raums (S1) positioniert,
**dadurch gekennzeichnet, dass**
dieser zumindest eine Abschnitt der Hydraulik-Einheit (HU), in einer Seitenansicht des Spreiz-Sitz-Fahrzeugs (1), über dem Durchtritts-Raum (S1) positioniert ist, wobei die Hydraulik-Einheit (HU) den Durchtritts-Raum (S1) in einer Draufsicht des Spreiz-Sitz-Fahrzeugs überlappt.

2. Ein Spreiz-Sitz-Fahrzeug (1) gemäß Anspruch 1, **gekennzeichnet durch** eine Vorder-Stütze (56), die sich nach vorne von dem Kopf-Rohr (3) erstreckt, und einen Scheinwerfer (26), der durch die Vorder-Stütze (56) gelagert ist.

3. Ein Spreiz-Sitz-Fahrzeug (1) gemäß Anspruch 2, **dadurch gekennzeichnet, dass** die Vorder-Stütze (56) einen Scheinwerfer-Lager-Abschnitt (71), der den Scheinwerfer (26) lagert, und einen HU-Lager-Abschnitt (95) beinhaltet, der die Hydraulik-Einheit (HU) lagert.

4. Ein Spreiz-Sitz-Fahrzeug (1) gemäß Anspruch 3, **gekennzeichnet durch** eine Batterie, die innerhalb der Vorder-Abdeckung (20) positioniert ist.

5. Ein Spreiz-Sitz-Fahrzeug (1) gemäß Anspruch 4, **dadurch gekennzeichnet, dass** die Vorder-Stütze (56) weiterhin einen Batterie-Lager-Abschnitt (58) beinhaltet, der die Batterie (54) lagert.

6. Ein Spreiz-Sitz-Fahrzeug (1) gemäß irgendeinem der Ansprüche 4 oder 5, **gekennzeichnet durch** einen Sitz (17), der konfiguriert ist für einen Fahrer darauf zu sitzen, eine Lager-Box (31), die unter dem Sitz (17) positioniert ist.

7. Ein Spreiz-Sitz-Fahrzeug (1) gemäß irgendeinem der Ansprüche 2 bis 6, **dadurch gekennzeichnet, dass** das ABS weiterhin eine ECU (92), die an der Hydraulik-Einheit (HU) angebracht ist, und einen Kabelbaum (W1) beinhaltet, der konfiguriert ist, um elektrische Signale zu der ECU (92) zu übertragen, und
der Kabelbaum (W1) tritt durch einen Raum zwischen der Vorder-Gabel (12) und der Vorder-Stütze (56) hindurch.

8. Ein Spreiz-Sitz-Fahrzeug (1) gemäß irgendeinem einem der Ansprüche 7, **gekennzeichnet durch** einen Motor (14), der konfiguriert ist um eine BewegungsKraft zu erzeugen, um zu bewirken, dass das Spreiz-Sitz-Fahrzeug (1) fährt, und einen Schall-Dämpfer (19), der konfiguriert ist, Abgas, das durch den Motor (14) erzeugt ist, zu der Atmosphäre abzugeben; wobei
der Schall-Dämpfer (19) und die Hydraulik-Einheit (HU) an der rechten Seite von der Fahrzeug-Mittel (WO) positioniert sind, und
der Kabelbaum (W1) erstreckt sich von einer Position an der rechten Seiten der Fahrzeug-Mitte (WO) zu einer Position an der linken Seite von der Fahrzeug-Mitte (WO).

9. Ein Spreiz-Sitz-Fahrzeug (1) gemäß irgendeinem einem der Ansprüche 1 bis 8, **gekennzeichnet durch** eine Vorder-Tasche (34), die konfiguriert ist, um Gegenstände aufzunehmen, und die außerhalb der Vorder-Gabel (12), in der Breiten-Richtung des Spreiz-Sitz-Fahrzeugs (1), positioniert ist; wobei die Hydraulik-Einheit (HU) über der Vorder-Tasche (34) positioniert ist.

10. Ein Spreiz-Sitz-Fahrzeug (1) gemäß Anspruch 9, **dadurch gekennzeichnet, dass** eine obere Fläche der Vorder-Tasche (34) einen geneigten Abschnitt (34a) beinhaltet, der unter der Hydraulik-Einheit (HU) positioniert ist, und sich schräg nach vorne und unten in einer Seiten-Ansicht des Spreiz-Sitz-Fahrzeugs (1) erstreckt.

11. Ein Spreiz-Sitz-Fahrzeug (1) gemäß irgendeinem einem der Ansprüche 1 bis 10, **dadurch gekennzeichnet, dass** das ABS weiterhin eine Brems-Leitung (F1, F2) beinhaltet, die sich von der Hydraulik-Einheit (HU) erstreckt, und konfiguriert ist, um Öldruck zu übertragen, und
die Brems-Leitung (F1, F2) tritt durch einen Raum zwischen dem Paar von Gabel-Rohren (46) hindurch.

12. Ein Spreiz-Sitz-Fahrzeug (1) gemäß Anspruch 11, wobei die Brems-Leitung (F1, F2) durch einen Raum zwischen der Oben-Klammer (41) und der Unten-Klammer (44) hindurchtritt.

13. Ein Spreiz-Sitz-Fahrzeug (1) gemäß irgendeinem einem der Ansprüche 1 bis 12, **gekennzeichnet durch** ein Paar von Hand-Griffen (50), die jeweils an der rechten Seite und der linken Seite von der Fahrzeug-Mitte (WO) positioniert sind, und die konfiguriert sind, um durch einen Fahrer ergriffen zu werden, wenn die Vorder-Gabel (12) nach rechts und links gedreht wird; wobei
die Hydraulik-Einheit (HU), in der Breiten-Richtung des Spreiz-Sitz-Fahrzeugs (1), an einer weiter innenliegenden Position positioniert ist als ein inneres Ende (50i) des Handgriffs (50).

## Revendications

1. Véhicule à enfourcher (1) comportant :
une roue avant (Wf) ;
une fourche avant (12) qui supporte la roue avant (Wf) ;
un tube frontal (3) qui supporte la fourche avant (12) de telle manière que la fourche avant (12) peut tourner vers la droite et vers la gauche entre une position de direction maximale droite et une position de direction maximale gauche,
un ABS comprenant une unité hydraulique (HU) configurée pour commander une force de freinage à appliquer à la roue avant (Wf) ; et
un capot avant (20) qui abrite une partie supérieure de la fourche avant (12) et de l'unité hydraulique (HU) ; où
la fourche avant (12) comprend :
une paire de tubes de fourche (46) qui sont respectivement disposés sur un côté droit et un côté gauche d'un centre du véhicule (WO) ;
un arbre de direction (40) qui est inséré dans le tube frontal (3) ;
un té de fourche supérieur (41) qui est raccordé à la paire de tubes de fourche (46) et à l'arbre de direction (40) ; et
un té de fourche inférieur (44) qui est disposé en une position plus basse que le té de fourche supérieur (41) et qui est raccordé à la paire de tubes de fourche (46) et à l'arbre de direction (40) ;
le té de fourche supérieur (41) comprend une paire de parties de support supérieures, (42) dans lesquelles sont respectivement insérées la paire de tubes de fourche (46), et qui sont disposées respectivement sur le côté droit et le côté gauche du centre du véhicule (WO),
la partie de support supérieure (42) du té de fourche supérieur (41) est configurée pour se déplacer dans une direction avant/arrière du véhicule à enfourcher (1) et passe à travers un espace traversant (S1) conformément à la rotation de la fourche avant (12) entre la position de direction maximale droite et la position de direction maximale gauche,
l'unité hydraulique (HU) est entièrement disposée en un emplacement plus extérieur dans la direction de la largeur du véhicule à enfourcher (1) que le tube frontal (3), et
au moins une partie de l'unité hydraulique (HU) est disposée en un emplacement plus bas qu'une extrémité supérieure (S1u) de l'espace traversant (S1) dans une vue latérale du véhicule à enfourcher (1),
**caractérisé en ce que**
ladite au moins une partie de l'unité hydraulique (HU) est disposée au-dessus de l'espace traversant (S1) dans une vue latérale du véhicule à enfourcher (1), où l'unité hydraulique (HU) se superpose à l'espace traversant (S1) dans une vue en plan du véhicule à enfourcher (1).

2. Véhicule à enfourcher (1) selon la revendication 1, **caractérisé par** un étai avant (56) qui s'étend vers l'avant à partir du tube frontal (3) et un phare avant (26) qui est supporté par l'étai avant (56).

3. Véhicule à enfourcher (1) selon la revendication 2, **caractérisé en ce que** l'étai avant (56) comprend une partie de support de phare (17) qui supporte le phare avant (26) et une partie de support d'HU (95) qui supporte l'unité hydraulique (HU).

4. Véhicule à enfourcher (1) selon la revendication 3, **caractérisé par** une batterie (54) qui est disposée à l'intérieur du capot avant (20).

5. Véhicule à enfourcher (1) selon la revendication 4, **caractérisé en ce que** l'étai avant (56) comprend en outre une partie de support de batterie (58) qui supporte la batterie (54).

6. Véhicule à enfourcher (1) selon l'une quelconque des revendications 4 ou 5, **caractérisé par** une selle (17) configurée de manière à permettre à un conducteur de s'y asseoir, un coffre de rangement (31) qui est disposé sous la selle (17).

7. Véhicule à enfourcher (1) selon l'une quelconque des revendications 2 à 6, **caractérisé en ce que** l'ABS comprend en outre une ECU (92) qui est attachée à l'unité hydraulique (HU) et un faisceau de câbles (W1) configuré pour transmettre des signaux électriques à l'ECU (92), et
le faisceau de câbles (W1) passe à travers un espace entre la fourche avant (12) et l'étai avant (56).

8. Véhicule à enfourcher (1) selon l'une quelconque des revendications 7, **caractérisé par** un moteur (14) configuré pour générer une force motrice pour occasionner un déplacement du véhicule à enfourcher (1) et un silencieux (19) configuré pour rejeter les gaz d'échappement générés par le moteur (14) dans l'atmosphère ; où
le silencieux (19) et l'unité hydraulique (HU) sont disposés sur le côté droit du centre du véhicule (WO), et
le faisceau de câbles (W1) s'étend d'une position située sur le côté droit du centre du véhicule (WO) à une position située sur le côté gauche du centre du véhicule (WO).

9. Véhicule à enfourcher (1) selon l'une quelconque des revendications 1 à 8, **caractérisé par** une poche avant (34) configurée pour abriter des objets et qui est disposée à l'extérieur de la fourche avant (12) dans la direction de la largeur du véhicule à enfourcher (1) ; où
l'unité hydraulique (HU) est disposée au-dessus de la poche avant (34).

10. Véhicule à enfourcher (1) selon la revendication 9, **caractérisé en ce qu'**une surface supérieure de la poche avant (34) comprend une partie inclinée (34a) qui est disposée sous l'unité hydraulique (HU) et s'étend obliquement vers l'avant et vers le bas dans une vue latérale du véhicule à enfourcher (1).

11. Véhicule à enfourcher (1) selon l'une quelconque des revendications 1 à 10, **caractérisé en ce que** l'ABS comprend en outre un tuyau de frein (F1, F2) qui s'étend à partir de l'unité hydraulique (HU) et est configuré pour transmettre la pression de l'huile, et
le tuyau de frein (F1, F2) passe à travers un espace entre la paire de tubes de fourche (46).

12. Véhicule à enfourcher (1) selon la revendication 11, où le tuyau de frein (F1, F2) passe à travers un espace entre le té de fourche supérieur (41) et le té de fourche inférieur (44).

13. Véhicule à enfourcher (1) selon l'une quelconque des revendications 1 à 12, **caractérisé par** une paire de poignées de guidon (50) qui sont respectivement disposées sur le côté droit et sur le côté gauche du centre du véhicule (WO) et qui sont configurées pour être saisies par un conducteur lorsque la fourche avant (12) est tournée vers la droite et vers la gauche ; où
l'unité hydraulique (HU) est disposée dans une position plus intérieure dans la direction de la largeur du véhicule à enfourcher (1) qu'une extrémité intérieure (50i) de la poignée de guidon (50).
